# EUROPEAN PATENT APPLICATION

(11) **EP 4 485 764 A1**
(43) Date of publication of application: **01.01.2025**
(21) Application number: 23181542.4
(22) Date of filing: 26.06.2023
(51) Int. Cl.: H02K 11/215, H02K 29/08, H02K 7/116

(54) **ELECTRIC MOTOR**

(71) Applicant: ZF Friedrichshafen AG, 88046 Friedrichshafen (DE); Electro-Parts S.p.A., 12060 Bossolasco (IT)
(72) Inventor: Dettmar, Martin, 88046 Friedrichshafen (DE); Gemeinhardt, Andre, 88046 Friedrichshafen (DE); Bochert, Stefan, 88046 Friedrichshafen (DE); Göb, Michel, 88046 Friedrichshafen (DE); Thoma, Walter, 88046 Friedrichshafen (DE); Hahn, Stephan, 88046 Friedrichshafen (DE); Kiesel, Marco, 88046 Friedrichshafen (DE); Abeska, Matthias, 88046 Friedrichshafen (DE); Böhm, Christopher, 88046 Friedrichshafen (DE); Conti, Fabrizio, 12060 BOSSOLASCO (IT); Falcone, Marco, 12060 BOSSOLASCO (IT)
(74) Representative: Hafner & Kohl PartmbB

(57) **Abstract**

Electric motor (1), in particular BLDC-motor, comprising a control unit with a first control board (7) connected with a first determination device (9) and a second control board (8) connected with a second determination device (10), wherein at least one connection member (13, 13', 13") connects the first control board (7) and the second control board (8), wherein the connection member (13, 13', 13") is arranged in a receiving section inside a housing (6) of the electric motor (1).

## Description

The invention relates to an electric motor, in particular BLDC-motor, comprising a control unit with a first control board connected with a first determination device and a second control board connected with a second determination device.

Electric motors for applications in vehicles, such as actuating device for functional units in gear boxes or transmission devices, are widely known from prior art. For example, an electric motor can be used comprising a rotor with a rotor shaft that is connected via a transmission to an output shaft. The electric motor can be connected via the output shaft to a functional unit of the gearbox, for example a shift fork, an actuator of a clutch or the like. In such applications, it is often desired to determine parameters of the rotor shaft and the output shaft simultaneously, for example a speed of the input shaft and a speed of the output shaft or an angle of rotation of the input shaft and an angle of rotation of the output shaft. In order to determine positions or verify positions of an actuator connected with the electric motor or an actuating device comprising the electric motor, the determination of the parameters of the rotor shaft and the output shaft is advantageous.

For determining the parameters of the output shaft and the rotor shaft simultaneously, two determination devices are necessary. Usually a first determination device, e.g., a first sensor element, is arranged inside the electric motor near an end of the rotor shaft facing away from the output of the electric motor, e.g., facing away from the output shaft. For determining the second parameter of the output shaft a second sensor element can be arranged external with respect to the housing of the electric motor, e.g., provided by an external determination device. The second sensor can be arranged near the end of the output shaft. Thus, connecting the sensor elements with a common control board, e.g., a printed circuit board (PCB) is cumbersome. Even if two different control boards are used, the wiring inside and outside the electric motor is complex and usually requires two different connecting elements which makes the wiring outside the electric motor for connecting the electric motor to a control unit or the like complex.

It is an object of the present invention to provide an improved electric motor.

This object is accomplished by an electric motor according to claim 1. Advantageous embodiments are subject to the dependent claims.

As described above, the invention relates to an electric motor, particularly an electric motor for a vehicle. The electric motor comprises a housing in which a first control board and a second control board are arranged. The first control board is connected with a first determination device, e.g., a first sensor, such as a speed sensor or angle sensor, and the second control board is connected with a second determination device, e.g., a second sensor, such as a speed sensor or angle sensor. The invention is based on the idea that at least one connection member is provided that connects the first control board and the second control board, wherein the connection member is arranged in a receiving section inside a housing of the electric motor.

In other words, the invention suggests using or providing a connection member arranged inside the housing of the electric motor for connecting both control boards. Thus, it is advantageously not necessary to connect the control boards individually outside the housing or to connect each control board individually to a common control unit. Hence individual connection ports, e.g., plugs or sockets, are not necessary. Instead, it is possible to connect the control boards inside the housing of the electric motor in that the interface from inside the housing to a unit outside the electric motor, such as a central control unit, can be made via a single interface, for example a common connection port. Thus, one connector can be used that is connected to both sensors.

Thus, the requirements with respect to the build space in which the electric motor is arranged can be reduced, particularly concerning the wiring for the individual control boards of the electric motor. In particular, it is only necessary to use build space around the electric motor for the single connection to the single interface, wherein the interface is connected to both control boards which are in turn connected via the connecting member arranged inside the receiving section of the housing of the electric motor. Especially, both determination devices can be arranged inside the electric motor, particularly inside the housing of the electric motor in that it is not necessary to use an external determination device, e.g., for determining the parameters of the output shaft. The common interface may, for example, be arranged axially between the two control boards, particularly as common connection port.

According to an embodiment of the electric motor, the at least one connection member is at least partially arranged in a stator room delimited by a stator base body. Arranging the connection member that connects the first and the second control board in the stator room allows for efficiently using the build space inside the housing of the electric motor. It is particularly possible to connect the two control boards that are arranged in different axial positions inside the housing of the electric motor via the connection member. By using free build space inside the stator room, it is possible to guide the wiring through the stator room and therefore it is not necessary to extend the required build space of the electric motor, e.g., no change to the housing of the electric motor is necessary. Further, it is possible to achieve the connection via a solid frame instead of cables in that the connection is more resistant to vibrations. Thus, the connection member can provide a rigid configuration, particularly in such a way to have an easy assembly process during its mounting inside the electric motor.

The at least one connection member may further be at least partially arranged in a stator groove. The stator base body usually defines stator teeth and stator grooves that are alternatingly arranged in circumferential direction of the stator. The term "stator grooves" can also be understood as "stator slots". Thus, the term "stator grooves" can be replaced by the term "stator slots" throughout the application. According to the current embodiment, the connection member may be arranged at least partially in such a stator groove. Thus, the build space inside the stator room can be efficiently used and the connection member that connects the first control board with the second control board does not require a change to the build space in that the overall dimensions of the electric motor need not to be changed.

As discussed above, the first determination device can be assigned to the rotor shaft and the second determination device can be assigned to the output shaft, e.g., an input shaft of a transmission attached to the electric motor. According to an embodiment, the first determination device can be arranged on the rotational axis of the rotor shaft and/or the second determination device can be arranged on the rotational axis of the output shaft. Thus, it is possible to determine the speed and/or the angle of rotation of the rotor shaft and/or the output shaft individually.

The electric motor comprises at least one connection member for connecting the first control board with the second control board. It is possible to guide multiple wires or contacts or pins for different signals through the connection member or have different connection members for providing different connections between the first control board and the second control board. Particularly, the electric motor may comprise at least two, particularly three, connection members. It is possible to distribute the different connections, e.g., different wires, over the at least two connection members.

According to an embodiment it is also possible that the electric connections connecting the first and the second control board are arranged in only one connection member. Although multiple connection members that physically connect the control boards may be provided in the electric motor, only one connection member of the multiple connection members carries the electric connections. In other words, the electric connections are only arranged in and extend only through one connection member. Arranging the electric connections in only one connection member provides advantages with respect to electromagnetic signals generated within the electric motor, particularly with respect to the electromagnetic compatibility.

As discussed above, the rotor shaft of the electric motor is connected with an output shaft, e.g., of a transmission device connected to the rotor shaft, wherein the connection portion in which the rotor shaft is connected to the output shaft, e.g., via a gear wheel, is arranged inside the housing of the electric motor. In this embodiment, it is possible that the second control board comprises an opening, wherein the rotor shaft extends axially through the opening. Thus, the rotor shaft extends through a hole in the second control board that is assigned to the output shaft. The arrangement of the rotor shaft and the output shaft essentially parallel to one another, wherein the rotor shaft extends through the opening in the second control board allows for a particularly compact arrangement of the control boards and the shafts inside the housing of the electric motor.

The electric motor can further be improved by providing a connection port that is arranged in an intermediate plane arranged axially between the control boards. As discussed above, connecting the first control board with the second control board via the connection member allows for reducing the interface between the inside of the electric motor to the outside, e.g., via the connection port to be reduced to only one interface. In other words, both control boards can be connected to the connection port which can be arranged in an intermediate plane axially between the control boards. The intermediate plane does not need to be arranged in the middle of the motor, although the arrangement in a middle position is possible. The connection port can be positioned on a specific side of the motor.

According to another embodiment of the electric motor, a damping element can be provided that is arranged between the housing of the electric motor and the first control board. The damping element allows for damping of vibrations and a tolerance compensation between the housing and the arrangement of the first control board/rotor shaft.

Besides, the invention relates to an actuator assembly, comprising an inventive electric motor, as discussed above. Further, the invention relates to a vehicle comprising such an electric motor and/or an actuator assembly, as described above. All details, advantages and features of the electric motor are fully transferable to the actuator assembly and the vehicle.

Exemplary embodiments of the invention are described with reference to the Fig. The Fig. are schematic diagrams, depicting:
- Fig. 1: a schematic cross-section of an electric motor according to an embodiment;
- Fig. 2: a schematic cross-section of an electric motor according to an embodiment;
- Fig. 3: a schematic perspective view of a connection member for an electric motor according to an embodiment;
- Fig. 4: a schematic perspective view of a connection member for an electric motor according to an embodiment;
- Fig. 5: a schematic perspective view of a connection member for an electric motor according to an embodiment;
- Fig. 6: a schematic perspective view of an electric motor according to an embodiment; and
- Fig. 7: a schematic perspective view of an electric motor according to an embodiment.

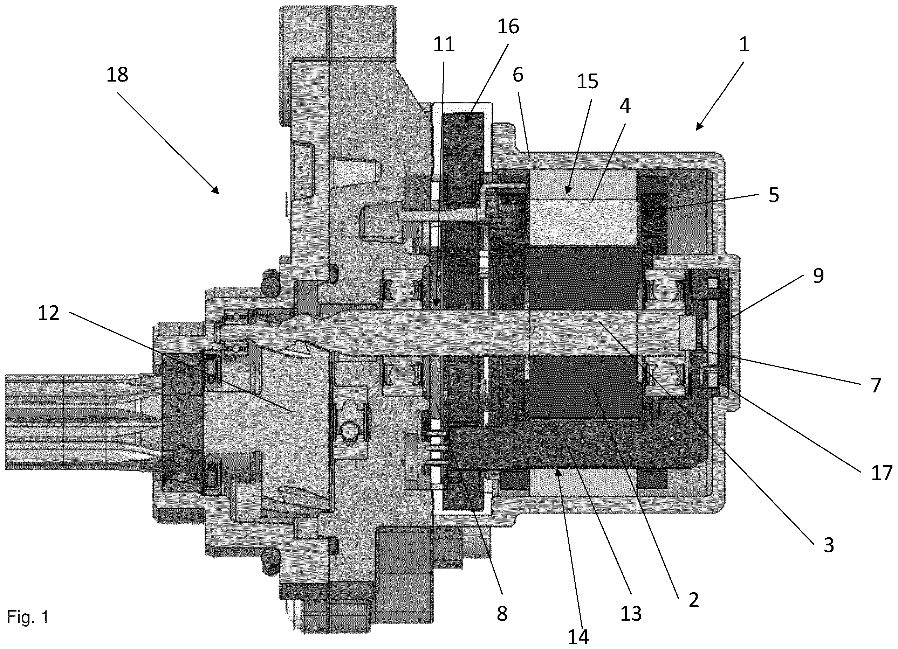

Fig. 1 shows an electric motor 1 with a rotor 2 connected to a rotor shaft 3. The electric motor 1 further comprises a stator 4 defining a stator room 5. The electric motor 1 comprises a housing 6 surrounding the components of the electric motor 1. Inside the housing 6 a first control board 7 and a second control board 8 are arranged, wherein the first control board 7 carries a first determination device 9 and the second control board 8 carries a second determination device 10. The first determination device 9 and the second determination device 10 can comprise sensor elements, e.g., speed sensors or angle sensors.

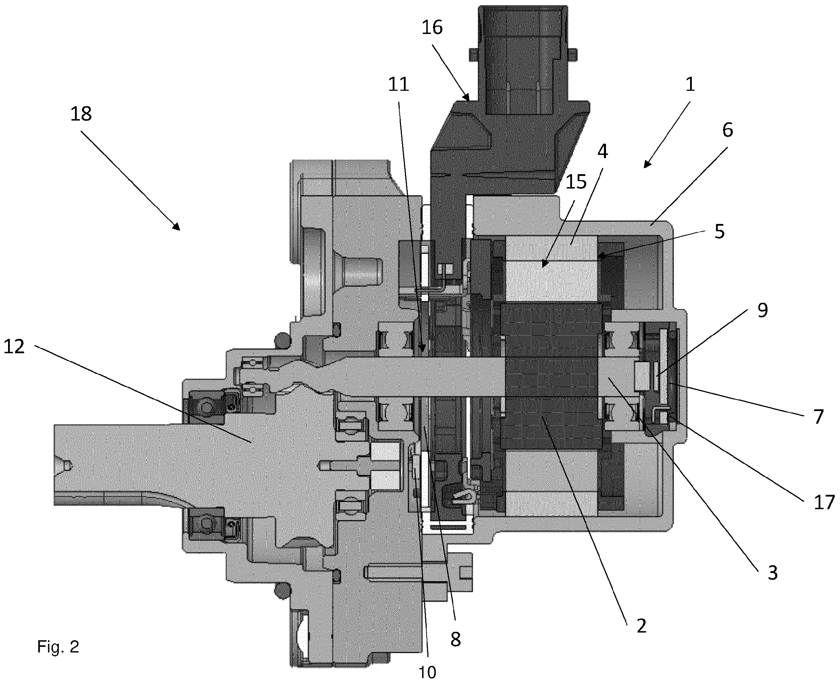

Fig. 1, 2 further show that the rotor shaft 3 extends through an opening 11 in the second control board 8. The first determination device 9 is arranged on the same rotational axis as the rotational axis of the rotor shaft 3, wherein the second determination device 10 is arranged on a rotational axis of an output shaft 12, e.g., a shaft of a transmission device attached to the electric motor 1 forming an actuator assembly 18.

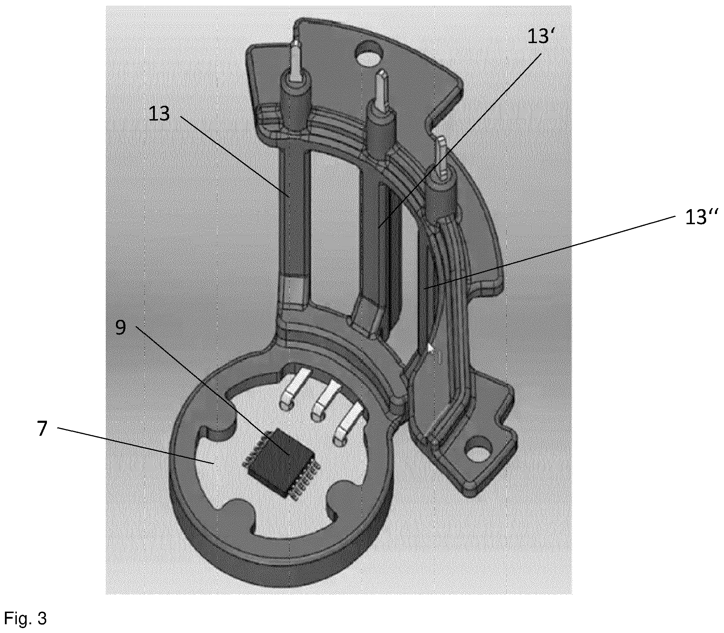

As is further depicted in Fig. 1, 2, the first control board 7 is connected to the second control board 8 via a connection member 13 (depicted in Fig. 3 - 5). The connection member 13 is arranged inside the housing 6 of the electric motor 1 and connects the control boards 7, 8 inside the housing 6.

According to the embodiment that is depicted in Fig. 3, multiple connection members 13, 13', 13" can be provided that extend axially through the stator room 5 for connecting the first control board 7 that is arranged next to the side of the rotor shaft 3 facing away from the output shaft 12. The connection members 13, 13', 13" extend through stator grooves 14 formed inside a stator base body 15. Thus, the build space required for the connection members 13, 13', 13" does not change the overall build space required by the electric motor 1.

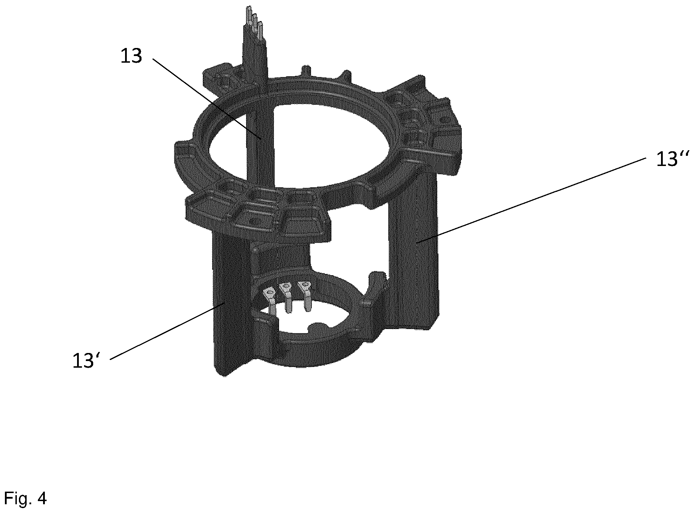

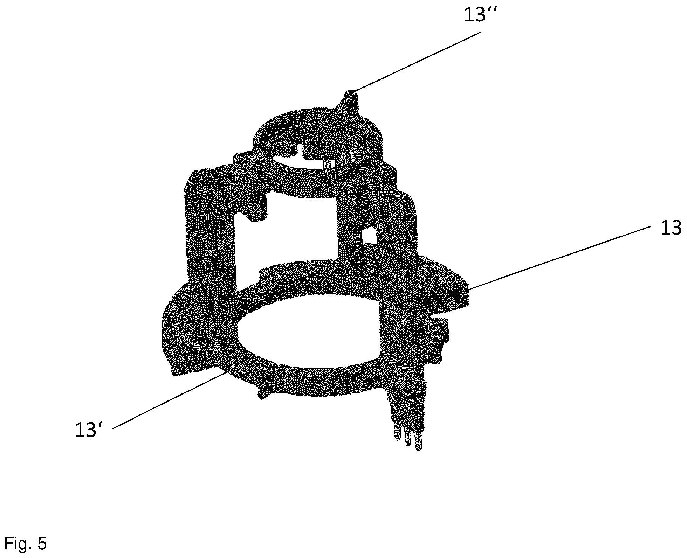

The embodiments depicted in Fig. 4, 5 show alternative connection members 13, 13', 13" that are distributed circumferentially and connected with each other. For example, three connection members 13, 13', 13" can be arranged in different circumferential positions, particularly forming an angle of 120° between each two connection members 13, 13', 13". Although it is possible to arrange the wires used for connecting the control boards 7, 8 in different connection members 13, 13', 13", it is preferred to arrange the wires in one single connection member 13 only. This particularly improves the electromagnetic compatibility.

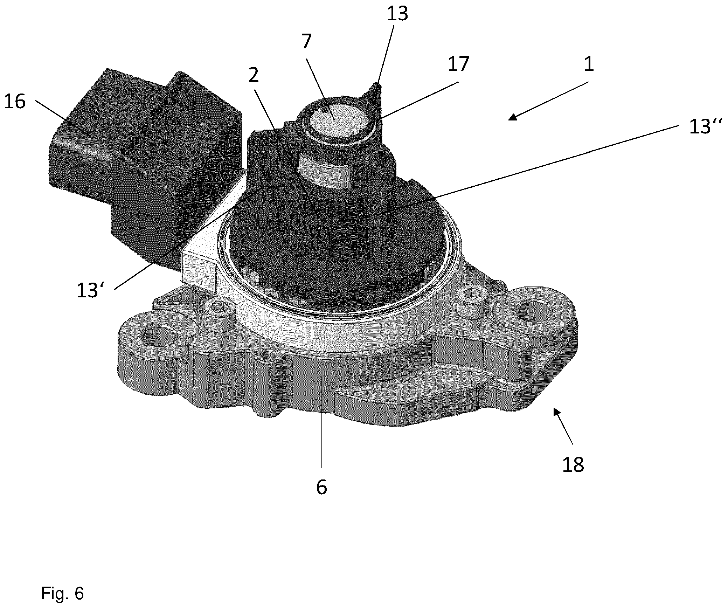

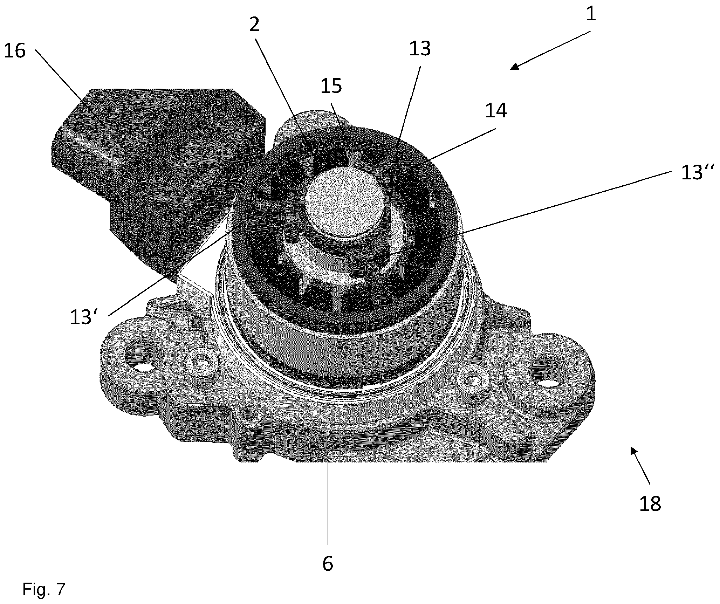

Fig. 6, 7 show connection members 13, 13', 13" connecting the first control board 7 with the second control board 8. Particularly from Fig. 7 it is possible to derive that the connection members 13, 13', 13" all physically or mechanically connect the first control board 7 with the second control board 8 by extending through the stator grooves 14 formed in the stator base body 15.

Fig. 2, 6, 7 further show that a connection port 16 is arranged in an intermediate plane arranged axially between the first control board 7 and the second control board 8, e.g., with respect to the rotational axis of the rotor shaft 3. Thus, both control boards 7, 8 can be connected with each other and connected with the common connection port 16. Thus, for connecting the electric motor 1 to a control unit or a power supply only one connection port 16 is used. This particularly reduces the wiring required outside the electric motor 1 for connecting both control boards 7, 8.

Fig. 1, 2 further show a damping element 17 arranged next to the first control board 7. The damping element 17 allows for a reduction of vibrations caused by the electric motor 1. Particularly, vibrations of the rotor shaft 3 can be reduced in that the vibrations that are transferred to the housing 6 can be dampened via the damping element 17. Further, the damping element 17 allows for compensating tolerances in the electric motor 1.

The electric motor 1 can particularly be a part of an actuator assembly 18 comprising the electric motor 1. The actuator assembly 18 can, for example, comprise a transmission device attached to the electric motor 1, which transmission device provides the output shaft 12.

All features, details and advantages described with respect to the individual Fig. can be combined, interchanged and transferred, as necessary.

### References

- 1: electric motor
- 2: rotor
- 3: rotor shaft
- 4: stator
- 5: stator room
- 6: housing
- 7: first control board
- 8: second control board
- 9: first determination device
- 10: second determination device
- 11: opening
- 12: output shaft
- 13 - 13": connection member
- 14: stator groove
- 15: stator base body
- 16: connection port
- 17: damping element
- 18: actuator assembly

## Claims

1. Electric motor (1), in particular BLDC-motor, comprising a control unit with a first control board (7) connected with a first determination device (9) and a second control board (8) connected with a second determination device (10), **characterized by** at least one connection member (13, 13', 13") connecting the first control board (7) and the second control board (8), wherein the connection member (13, 13', 13") is arranged in a receiving section inside a housing (6) of the electric motor (1).

2. Electric motor (1) according to claim 1, **characterized in that** the at least one connection member (13, 13', 13") is at least partially arranged in a stator room (5) delimited by a stator base body (15).

3. Electric motor (1) according to claim 2, **characterized in that** the at least one connection member (13, 13', 13") is at least partially arranged in a stator groove (14).

4. Electric motor (1) according to one of the preceding claims, **characterized in that** the first determination device (9, 10) comprises a first speed sensor assigned to a rotor shaft (3) of the electric motor (1) and/or the second determination device (9, 10) comprises a second speed sensor assigned to an output shaft (12) of a gear unit connected with the rotor shaft.

5. Electric motor (1) according to one of the preceding claims, **characterized in that** the first determination device (9) is arranged on the rotational axis of the rotor shaft (3) and/or the second determination device (10) is arranged on the rotational axis of the output shaft (12).

6. Electric motor (1) according to one of the preceding claims, **characterized in that** the electric motor (1) comprises at least two, particularly three, connection members (13, 13', 13").

7. Electric motor (1) according to claim 6, **characterized in that** electric connections connecting the first and the second control board (7, 8) are arranged in only one connection member (13).

8. Electric motor (1) according to one of the preceding claims, **characterized in that** the second control board (7, 8) comprises an opening (11), wherein the rotor shaft (3) extends axially through the opening.

9. Electric motor (1) according to one of the preceding claims, **characterized in that** a connection port (16) is arranged in an intermediate plane arranged axially between the control boards (7, 8).

10. Electric motor (1) according to one of the preceding claims, **characterized by** a damping element (17) arranged between the housing (6) of the electric motor (1) and the first control board (7).

11. Actuator assembly (18), comprising an electric motor (1) according to one of the preceding claims.

12. Vehicle comprising an electric motor (1) according to one of the claims 1 to 10 and/or an actuator assembly (18) according to the preceding claim.
